# EUROPEAN PATENT SPECIFICATION

(11) **EP 2 183 285 B1**
(45) Date of publication and mention of the grant of the patent: **11.05.2011**
(21) Application number: 08787007.7
(22) Date of filing: 07.08.2008
(51) Int. Cl.: C08F 2/00, C08F 2/14

(54) **PROCESS FOR THE OLEFIN POLYMERIZATION USING MULTIPLE LOOP REACTORS**
VERFAHREN ZUR POLYMERISIERUNG VON OLEFINEN MITHILFE MEHRERER SCHLAUFENREAKTOREN
PROCÉDÉ DE POLYMÉRISATION D'OLÉFINES UTILISANT DE MULTIPLES RÉACTEURS À BOUCLE

(30) Priority: 27.08.2007 EP 07115049
(43) Date of publication of application: 12.05.2010
(73) Proprietor: Basell Poliolefine Italia S.R.L., 20124 Milano (IT)
(72) Inventor: PENZO, Giuseppe, I-46047 Montanara di Curtatone, Mantova (IT); MICHIELIN, Luciano, deceased (IT); RINALDI, Roberto, I-46100 Mantova (IT); GALA, Antonio, I-44100 Ferrara (IT)
(74) Representative: Colucci, Giuseppe
(86) International application number: PCT/EP2008/060411
(87) International publication number: WO 2009/027197

(56) References cited:
- WO-A-2006/003144

## Description

The present invention relates to a process for the liquid-phase polymerization of olefins carried out in a sequence of at least two loop reactors. The invention also relates to an apparatus for polymerizing olefins comprising at least two loop reactors and transfer means for conveying a polymer slurry from a loop reactor to another loop reactor.

It is known to carry out the olefin polymerization under slurry conditions in one or more loop reactors. This type of reactor is widely used in the production of polyethylene and polypropylene. The obtained product consists of solid polymer particles in a suspension of liquid monomers (bulk polymerization), or alternatively, polymer particles in a suspension of liquid monomers mixed together with an inert solvent, as the polymerization diluent. Propylene (co)polymers are typically produced by using liquid propylene as the polymerization medium, in order to maximize the rate of the polymerisation reaction by providing a high monomer concentration.

The polymer slurry is continuously circulated in the loop reactor by a pump to maintain a homogeneous dispersion of the solid polymer in the liquid reaction medium. A polymer slurry is withdrawn from the reactor and may be concentrated so that the solid content at the reactor outlet is higher than the solid content inside the loop reactor. Traditionally, this has been done by using settling legs at the discharge from the loop reactor: settling legs operate on a batch principle to recover the product. The concentrated polymer slurry is successively transferred to a flash tank, where most of the diluent and unreacted monomers are flashed off, so as to separate the solid polymer at the bottom of the flash tank.

It has also been known to use a second loop reactor that receives the polymer slurry from the first loop reactor to continue the polymerization reaction, possibly under different polymerisation conditions, to produce olefin polymers and copolymers having desired composition and properties.

During the standard working of the polymerization apparatus a predefined pressure gradient along the transfer line ensures a continuous transfer of polymer slurry between the first loop reactor and the second loop reactor. However, problems associated with the transfer of the polymer slurry between the two loop reactors can occur. For convenience reasons, multiple loop reactors are commonly arranged at a close distance each other, so that the first and the second loop reactors are commonly connected by means of a short transfer pipe. Accordingly, an eventual increase of pressure on the feeding line to the first reactor, or alternatively, a pressure increase at the exit from the second reactor, can give rise to a considerable reduction in the pressure gradient of the transfer line, with the negative effect of decreasing or even stopping the slurry flow rate along the transfer line. Such reduction or stopping of the slurry flow can eventually lead to the blockage of the transfer line, due to uncontrolled polymerization with formation of polymer chunks inside the transfer line. In case of obstruction of the transfer conduit, it becomes necessary to stop completely the polymerization plant with consequent loss of time and money.

In order to resolve the above technical drawback, different arrangements of the transfer lines connecting two loop reactors have been proposed.

WO 2005/077985 discloses a multiple loop reactor for polymerising olefins, in which a polymer slurry is transferred from a first loop reactor to a second loop reactor by using a substantially horizontal transfer line, which extends from the exit of a settling leg of the first reactor to the entry in the second reactor. Polymer is transferred directly from one reactor to the other via straight and substantially horizontal lines, enabling the reactors to be installed at larger distances. Curves or any other deviations from the horizontal orientation are avoided, since they can reduce the rate of polymer transfer and increase the frequency of plugging in the transfer line. Settling legs are located on segments or elbows of the loop reactors and allow the polymerisation slurry to decant and the concentration of solids to increase. Transfer or discharge of polymer is controlled by a multiple valve system.

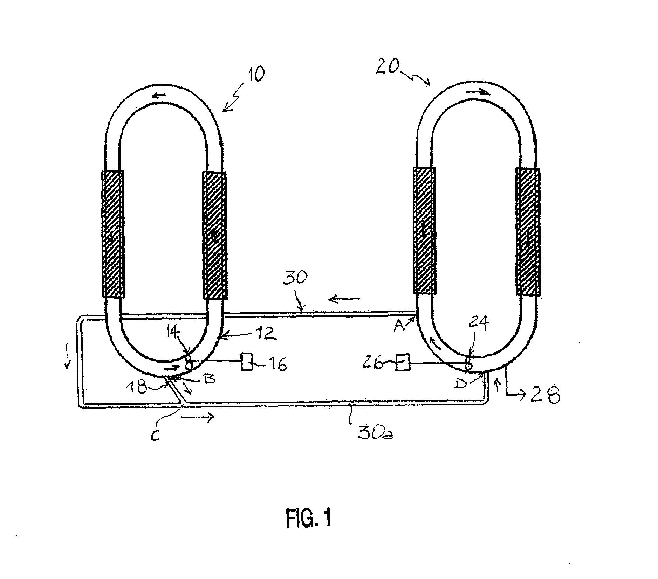

W0 05/080442 discloses interconnected loop reactors wherein the growing polymer flows continuously from the first loop to the second loop through a first transfer pipe, and back to the first loop through a second transfer pipe: the two pipes are completely separated, without any connection each other. In the embodiment of Fig. 1 the first pipe conveys the polymer slurry from a point upstream the circulation pump of the first reactor to a point upstream the circulation pump of the second reactor. The second pipe conveys back the polymer slurry from a point downstream the circulation pump of the second reactor to a point upstream the circulation pump of the first reactor. According to the experimental data given in the Example of W0 05/080442 both the above transfer lines are operated with a pressure gradient of only 0.5 bar. It is easy to understand that a little variation of pressure on the feed or at the discharge of the loop reactors can cause a further reduction of said limited pressure gradient with the negative effect of decreasing the flow rate of polymer slurry along the transfer lines: the risk of uncontrolled polymerization and plugging of the transfer line is realistic.

The processes and apparatuses described in the above prior art documents do not solve the problems associated with a direct connection between two serially connected loop reactors, said prior art arrangement being unable to absorb possible pressure changes in the first or the second loop reactor, with consequent loss of reliability in the operation of the polymerisation plant.

WO 2006/003144 discloses a slurry loop reactor system comprising at least two loop reactors connected in series and a by-pass line for connecting two points of the same reactor, said by-pass line also connecting the growing polymer exiting the first reactor to an entry point in the second reactor.

In view of the foregoing, there is the need of improving the arrangement of multiple loop reactors and their interconnecting transfer lines, so as to minimize the fluctuations in the flow rate of polymer slurry transferred between the two reactors and to ensure a reliable working of the polymerization plant.

It is therefore an object of the invention a process for the slurry polymerization of one or more α-olefins in a sequence of at least two loop reactors interconnected by means of a transfer line, the transfer of polymer from a first loop reactor to a second loop reactor comprising the steps:
i) establishing a recycle ofpolymer slurry to the second loop reactor by means of said transfer line, whereby a fraction of polymer slurry S1 withdrawn from said second loop reactor is continuously recycled back to it;
ii) discharging a fraction of polymer slurry produced in the first loop reactor into a discharge line connected to said transfer line;
wherein the weight ratio R between the total polymer slurry S2 recycled back to said second loop reactor and the productivity of the polymerization plant ranges from 2 to 8.

The polymerization process of present invention is based on a peculiar arrangement of multiple loop reactors and the transfer line connecting the loop reactors each other. In fact, the transfer line of the invention, in addition to the conventional function of transferring the polymer from the first reactor to the second reactor, operates also a continuous recycle of polymer from a zone to another zone of the second loop reactor. The transfer line is configured as a "belt connection", and this allows to implement the above step i) ensuring a continuous recirculation of a fraction of polymer slurry produced in the second loop reactor. In particular, a fraction S1 of polymer slurry produced in the second loop reactor enters the transfer line and is conveyed in proximity of the first loop reactor, where the transfer line merges with a discharge line coming from the first loop reactor. As a consequence, the fraction S1 of polymer slurry coming from the second reactor joins with the polymer slurry discharged from the first loop reactor. Afterwards, the respective amounts of polymer slurry coming from the above steps i) and ii) flow together into the transfer line, so that they are mixed together before reaching the outlet of the transfer line, arranged on the second loop reactor.

In order to better clarify the operative conditions adopted in the polymerization process of the present invention, the flow rate of the polymer slurry coming from the second loop reactor and entering the transfer line is indicated with **S1,** while the flow rate of the total polymer slurry returning back to the second loop reactor is indicated with **S2.**

The above defined polymer slurry **S1** is a fraction considerable of the slurry circulating inside the second loop reactor: **S1** generally ranges from 1% to 10% by weight of the polymer slurry circulating in the second loop reactor, preferably from 2.0% to 6% by weight thereof.

The productivity **P** of the polymerization plant, i.e. the total flow rate of polymer formed in the first and the second reactor, generally ranges from 0.1 to 3% by weight of the slurry circulating inside each loop reactor.

It may be useful to define a parameter which indicates how much polymer slurry is continuously recycled along the transfer line of the invention with respect the productivity **P** of the polymerization plant. This parameter is the weight ratio **R** between the above defined slurry **S2** and the productivity **P** of polymerization plant: in order to ensure the best operability of the polymerization process the weight ratio **R** is generally selected so as to range from 2 to 8, preferably from 3 to 6. These values of **R** demonstrate that a considerable amount of polymer slurry is continuously recycled via the transfer line of the invention in comparison with the productivity **P** of the polymerization plant.

The polymerization process of the invention gives many advantages. Differently from the prior art arrangements, the transfer line of the invention is not a connection directly joining the first and the second loop reactor, but it is a "belt connection" having a considerable length: it starts from the second reactor, reaches a zone in proximity of the first loop reactor and returns back to the second loop reactor. Due to this considerable length, the gradient pressure along this transfer line is increased with respect to the prior art arrangements: this leads to an improvement in the capacity of damping possible pressure changes in the operative conditions of the first or second loop reactor, so that the consequent fluctuations in the flow rate of the transferred polymer are considerably reduced, with minimization of the risk of plugging the transfer line.

A further important advantage given by the polymerization process of the invention is correlated with the continuous recirculation of the polymer slurry coming from the second reactor and its continuous mixing with the polymer slurry coming from the first reactor. The transfer of polymer slurry from the first reactor to the second reactor via the transfer line of the invention also implies the pick-up of a considerable amount of polymer slurry coming from the second loop reactor: this allows to achieve an increased homogeneity of the final polymer obtained by the polymerization process. In fact, it is easy to understand that when the two loop reactors are operated with a different monomer concentration, said continuous mixing of different polymeric fractions operated in the transfer line increases the homogeneity, in term of physical properties, of the final product discharged from the second loop reactor.

The olefin polymerization of the invention is carried out under slurry conditions, so that the polymer particles are suspended in a liquid polymerization medium. Slurry polymerisation using the liquid monomers as the polymerisation medium (bulk polymerization) allows to maximize the rate of the polymerisation reaction by providing a high monomer concentration, and to simplify the process by eliminating the use of solvents or diluents that must be purified and recycled. Loop reactors for slurry polymerisation in liquid monomer are typically provided with jacketed walls, which provide a high ratio of cooling area to the reactor volume.

The polymerization catalysts used in the polymerisation process of the invention are obtained from compounds of transition metals belonging to Groups IV, V or VI of the Periodic Table of the Elements and aluminium alkyl compounds and/or alumoxane compounds, or are catalysts based on chromium oxide.

Preferred catalysts for the polymerisation of propylene, optionally with other α-olefins, are the high-yield, high-stereospecificity Ziegler/Natta catalysts comprising solid components supported on active MgCl₂.

Hydrogen is preferably used as a chain transfer agent to adjust the molecular weight of the produced polyolefin. The monomers to be polymerized by the process of the invention are α-olefins of formula CH₂=CHR, where R is hydrogen or a hydrocarbon radical having 1-12 carbon atoms. Preferably said α-olefin is propylene: in this case the propylene concentration is comprised between 60 and 100% by weight, preferably between 75 and 95%, based on the total amount of liquid present in the loop reactor. The remaining part of liquid may comprise an inert hydrocarbon, if present, and one or more α-olefin comonomers in case of copolymerization. The preferred comonomer is ethylene.

The polymerization temperature in the loop reactors is comprised between 60°C and 95°C, preferably from 65 to 85°C, while the pressure ranges from 20 to 50 bar, preferably from 25 to 40 bar. The residence time of the slurry in the loop reactors is comprised between 10 min and 90 min, preferably between 20 min and 60 min.

In the following of the description the invention is illustrated also by means of Figure 1, which is a simplified scheme representing a preferred, but non-limiting embodiment of the invention.

Fig.1 is a diagrammatic representation of a slurry polymerisation of olefins performed in a sequence of a first loop reactor 10 and a second loop reactor 20. Catalyst components, cocatalyst, hydrogen as the molecular weight regulator, and monomers are introduced into the loop reactor via line 12. In the case of use of a Ziegler/Natta catalyst comprising a solid component supported on active MgCl₂, the solid component can be fed as such or preferably in a pre-polymerised form.

The monomers and/or the hydrogen concentrations in the second loop reactor 20 may differ from those in the first reactor 10, so as to produce final polymers or copolymers having a desired composition and physical properties.

The polymer slurry of the first reactor 10 is continuously recirculated inside the loop reactor 10 by means of the axial pump 14 driven by a motor 16. Transfer of polymer slurry from the first loop reactor 10 to the second loop reactor 20 is carried out by the operative conditions of present invention: a fraction of polymer slurry is continuously discharged from the loop reactor 10 via the discharge line 18 and enters the transfer line connecting the two loop reactors.

According to step i) of the invention a fraction S1 of polymer slurry is withdrawn from the second loop reactor 20 and enters the transfer line 30. Said fraction S1 of polymer slurry is preferably withdrawn from a zone located downstream the pumping means of the loop reactor 20. As shown in Fig. 1, the fraction S1 is withdrawn at a point designated with A, located downstream the axial pump 24, which ensures the continuous circulation of the slurry inside the loop reactor 20. The transfer line 30 conveys the polymer slurry S1 to a zone in proximity of the first loop reactor 10, where the transfer line 30 bends and surrounds the lower portion of loop reactor 10, then returning back to the loop reactor 20 via the end portion 30a.

The discharge line 18 is located at the bottom of loop reactor 10 at a zone designated with B, said discharge line 18 merging into the transfer line 30 at the point C. The end portion of transfer line from point C to the point of entry D into the loop reactor 20 is designated with 30a. In the end portion 30a the fraction of polymer slurry S1 and the polymer slurry discharged from the loop reactor 10 are mixed together and conveyed to the second loop reactor 20.

A polymer slurry S2 is recycled back to the second loop reactor 20: the point of entry D into the loop reactor 20 is placed upstream the axial circulation pump 24. As a consequence, the pumping means 24 of the second loop reactor 20 provide the pressure head to guarantee the flow of the polymer slurry along the transfer line 30 and also the pressure head to ensure the continuous circulation of the slurry in the loop reactor 20. In particular, the flow circulation between the starting point A and the end point D of the transfer line 30 is ensured by the pressure head provided by the pumping means 24. Generally, the pressure gradient between the starting point A and the end point D is higher than 1.0 bar, preferably in a range from 1 to 2 bar.

The obtained polyolefin slurry discharged from the loop reactor 20 via the discharge line 28 can be fed to a flash tank (not shown) for separating the solid polymer particles from the liquid phase.

In connection with the description of enclosed Fig.1, it is another object of the invention an apparatus for the continuous polymerisation of olefins comprising two serially connected loop reactors 10, 20 and a transfer line 30 for transferring the polymer from the first loop reactor 10 to the second loop reactor 20, the apparatus being characterized in that:
- said transfer line 30 originates from said second loop reactor 20 at a point A downstream the pumping means 24 of said second loop reactor 20 and returns to said second loop reactor 20 at a point D upstream said pumping means 24;
- a discharge line 18 coming from said first loop reactor 10 merges into said transfer line 30.

As known to the person skilled in the art, the polymerization loop reactors 10, 20 may be also formed by more than two vertical legs, joined each other by means of top and bottom bends, so as to generate a loop structure. According to a preferred embodiment, the polymerization loop reactors 10, 20 comprises from 4 to 8 vertical legs (not shown in Fig.l).

The bottom portion of the vertical legs of the loop reactors 10, 20 are provided with on-off emergency valves (not shown in Fig.1) for empting the loop reactor in case of emergency or maintenance reasons. According to an alternative embodiment, said on-off emergency valves may be placed on the bottom bends of the loop reactors 10, 20.

As previously explained, in the polymerization apparatus of the invention the transfer line 30 is arranged so as to protrude to a zone in proximity of the first loop reactor 10 and to surround the lower part of said loop reactor 10. The transfer line 30 comprises a first portion AC extending from said second loop reactor to the point C, wherein the transfer line 30 merges into the discharge line 18, and an end portion CD extending from said point C and the point D on the second loop reactor 20. The end portion CD must receive also the slurry discharged from the first loop reactor 10, so that the diameter of said end portion CD is greater than the diameter of portion AC of the transfer line.

The following examples will further illustrate the present invention without limiting its scope.

### EXAMPLES

### Example 1

A polypropylene homopolymer is produced by liquid-phase polymerization in a sequence of two loop reactors interconnected each other by means of the transfer line of present invention, as shown in Figure 1. The liquid monomer is polymerized in the absence of any polymerization diluent (bulk polymerizaytion), so as to form a slurry of polypropylene in the liquid monomer.

A Ziegler-Natta catalyst is used as the polymerization catalyst, comprising a titanium-based solid catalyst component supported on a magnesium chloride, triethylaluminium (TEAL) as the cocatalyst and an alkyl-alkoxysilane as an external donor.

The above catalyst components are fed to a pre-contacting vessel, in amounts such that the weight ratio TEAL/solid component is of 5, the weight ratio TEAL/external donor is of 3.5. The above catalyst components are pre-contacted at a temperature of 15°C for 10 minutes.

### Polymerization conditions 1^{st} loop reactor

Temperature: 73°C
Pressure (upstream the circulation pump): 41 bar
Polymer concentration in the slurry: 50% by weight (the remaining is propylene)

### Polymerization conditions 2^{nd} loop reactor

Temperature: 73°C
Pressure (upstream the circulation pump): 40.5 bar
Polymer concentration in the slurry: 50% by weight (the remaining is propylene)

### Operative conditions along the transfer line

The pumping means 24 provide the pressure head for the continuous circulation of the polymer slurry inside the second loop reactor 20 and also the pressure head needed to guarantee the flow of the polymer slurry along the transfer line 30. The pressure at point (A) downstream the pump 24 is of about 42 bar, while at point (D) upstream the pump 24 is of about 40.5 bar. The pressure at point (C), where the discharge conduit 18 from the first loop reactor 10 joins the transfer line 30 is of about 41 bar, so that P_{(A)}> P_{(c)}> P_{(D)} and a steady circulation of polymer slurry in the transfer line is ensured by such a pressure profile.

4500 t/h of polymer slurry are continuously circulated inside the first loop reactor 10, and simultaneously 45 t/h of slurry are discharged from this reactor via the discharge line 18. Likewise, 4500 t/h of polypropylene slurry are continuously circulated inside the second loop reactor 20 and 70 t/h of slurry are continuously discharged from the second loop reactor via the discharge line 28. Being the polymer concentration in the slurry of 50% by weight, the productivity P of the polymerization plant is of 35t/h of polypropylene.

120 t/h of slurry **S1** enter the transfer line 30 coming from the loop reactor 20, so that 165 t/h of polypropylene slurry **S2** flow along the end portion 30a of the transfer line. The ratio **R** between the slurry **S2** and the productivity **P** of the polymerization plant is of about 4.7.

The melt index MIL (ASTM-D 1238, conditions 230°C/2.16 Kg) of the polypropylene particles discharged from the second loop reactor is about 6 g/10'.

### Example 2

A propylene/ethylene random copolymer is produced by liquid-phase polymerization in a sequence of two loop reactors interconnected each other by means of the transfer line of present invention. The same Ziegler-Natta catalyst of Example 1 is used: a slurry of propylene/ethylene copolymer in the liquid monomers is formed and circulate inside the two loop reactors.

### Polymerization conditions 1^{st} loop reactor

Temperature: 75°C
Pressure (upstream the circulation pump): 41 bar
Ethylene concentration: 2.2% by weight
Propylene concentration: 97.8% by weight
Polymer concentration in the slurry: 54% by weight

### Polymerization conditions 2^{nd} loop reactor

Temperature: 75°C
Pressure (upstream the circulation pump): 40.5 bar
Ethylene concentration: 2.2% by weight
Propylene concentration: 97.8% by weight
Polymer concentration in the slurry: 54% by weight

### Operative conditions along the transfer line

The pressure at point (A) downstream the pump 24 is of about 42 bar, while at point (D) upstream the pump 24 is of about 40.5 bar. The pressure at point (C), where the discharge conduit 18 from the first loop reactor 10 joins the transfer line 30 is of about 41 bar, so that P_{(A)}> P_{(c)}> P_{(D)} and a steady circulation of polymer slurry in the transfer line is ensured by such a pressure profile.

5500 t/h of copolymer slurry are continuously circulated inside the first loop reactor 10, and simultaneously 65 t/h of slurry are discharged from this reactor via the discharge line 18. Likewise, 5500 t/h of copolymer slurry are continuously circulated inside the second loop reactor 20 and 100 t/h of slurry are continuously discharged from the second loop reactor via the discharge line 28. Being the copolymer concentration in the slurry of 54% by weight, the productivity P of the polymerization plant is of 54 t/h of propylene random copolymer.

150 t/h of slurry S1 enter the transfer line 30 coming from the loop reactor 20, so that 215 t/h of polypropylene slurry **S2** flow along the end portion 30a of the transfer line. The ratio **R** between the slurry **S2** and the productivity **P** of the polymerization plant is of about 4.0.

The melt index MIL of the propylene random copolymer discharged from the polymerization plant is about 9 g/10'.

### Example 3 (Comparative)

The same polymerization conditions of Example 2 are set in the 1^{st} and 2^{nd} loop reactors to prepare a propylene/ethylene random copolymer.

### Operative conditions along the transfer line

The pressure at point (A) downstream the pump 24 is of about 42 bar, while at point (D) upstream the pump 24 is of about 40.5 bar.

5500 t/h of copolymer slurry are continuously circulated inside the first loop reactor 10, and simultaneously 65 t/h of slurry are discharged from this reactor via the discharge line 18. Likewise, 5500 t/h of copolymer slurry are continuously circulated inside the second loop reactor 20 and 100 t/h of slurry are continuously discharged from the second loop reactor via the discharge line 28. Being the copolymer concentration in the slurry of 54% by weight, the productivity **P** of the polymerization plant is of 54 t/h of propylene random copolymer.

450 t/h of slurry **S1** enter the transfer line 30 coming from the loop reactor 20, so that 515 t/h of polypropylene slurry **S2** flow along the end portion 30a of the transfer line. The ratio **R** between the slurry **S2** and the productivity **P** of the polymerization plant is of about 9.5.

In comparison with the Example 2 a fluctuation of the pressure value has been observed in correspondence of point (C), where the discharge conduit 18 from the first loop reactor 10 joins the transfer line 30. The pressure at point (C) fluctuates from a minimum of 41.0 bar to a maximum of 41.5 bar: as a consequence, the flow rate of slurry discharged from loop reactor 10 via line 18 is not constant, but is subjected to a fluctuation (the above indicated value of 65 t/h is an average value in a period of 72 hours). This irregular discharge of polymer from the loop reactor 10 causes a lack of homogeneity of the polymer concentration in the slurry with a high risk to have polymer agglomeration inside the discharge line 18. This example demonstrates that, when the transfer line of present invention is operated at a weight ratio R higher than 8, a loss of reliability in the working of the polymerisation plant is involved.

## Claims

1. A process for the slurry polymerization of one or more α-olefins in a sequence of at least two loop reactors interconnected by means of a transfer line, the transfer of polymer from a first loop reactor to a second loop reactor comprising the steps:
i) establishing a recycle of polymer slurry to the second loop reactor by means of said transfer line, whereby a fraction of polymer slurry S1 withdrawn from said second loop reactor is continuously recycled back to it;
ii) discharging a fraction of polymer slurry produced in the first loop reactor into a discharge line connected to said transfer line;
wherein the weight ratio R between the total polymer slurry S2 recycled back to said second loop reactor and the productivity of the polymerization plant ranges from 2 to 8.

2. The process according to claim 1, wherein a mixing of the respective amounts of polymer slurry coming from steps i) and ii) is carried out in said transfer line.

3. The process according to claim 1, wherein said weight ratio R ranges from 3 to 6.

4. The process according to claim 1, wherein said fraction of polymer slurry S1 is withdrawn downstream the pumping means of said second loop reactor.

5. The process according to claim 1, wherein the pumping means of said second loop reactor provide the pressure head to flow the polymer slurry along said transfer line.

6. The process according to claim 1, wherein said polymer slurry S1 ranges from 1% to 10% by weight of the polymer slurry circulating in said second loop reactor.

## Patentansprüche

1. Verfahren zur Aufschlämmungspolymerisation von einem oder mehreren α-Olefinen in einer Folge von mindestens zwei Schlaufenreaktoren, die über eine Überführungsleitung miteinander verbunden sind, wobei die Überführung von Polymer von einem ersten Schlaufenreaktor zu einem zweiten Schlaufenreaktor die folgenden Schritte umfasst:
i) Herstellen einer Rückführung von Polymeraufschlämmung zu dem zweiten Schlaufenreaktor mit Hilfe der Überführungsleitung, wodurch eine Fraktion der aus dem zweiten Schlaufenreaktor abgezogenen Polymeraufschlämmung S1 kontinuierlich zu diesem zurückgeführt wird;
ii) Ausleiten einer Fraktion der in dem ersten Schlaufenreaktor hergestellten Polymeraufschlämmung in eine mit der Überführungsleitung verbundene Auslassleitung;
wobei das Gewichtsverhältnis R zwischen der gesamten zu dem zweiten Schlaufenreaktor zurückgeführten Polymeraufschlämmung S2 und der Produktivität der Polymerisationsanlage im Bereich von 2 bis 8 liegt.

2. Verfahren nach Anspruch 1, wobei ein Mischen der jeweils aus den Schritten i) und ii) kommenden Mengen von Polymeraufschlämmung in der Überführungsleitung durchgeführt wird.

3. Verfahren nach Anspruch 1, wobei das Gewichtsverhältnis R im Bereich von 3 bis 6 liegt.

4. Verfahren nach Anspruch 1, wobei die Fraktion der Polymeraufschlämmung S1 stromabwärts von den Pumpmitteln des zweiten Schlaufenreaktors abgezogen wird.

5. Verfahren nach Anspruch 1, wobei die Pumpmittel des zweiten Schlaufenreaktors den Förderdruck bereitstellen, damit die Polymeraufschlämmung durch die Überführungsleitung strömen kann.

6. Verfahren nach Anspruch 1, wobei die Polymeraufschlämmung S1 im Bereich von 1 Gew.-% bis 10 Gew.-% der in dem zweiten Schlaufenreaktor zirkulierenden Polymeraufschlämmung liegt.

## Revendications

1. Procédé pour la polymérisation en suspension d'une ou de plusieurs α-oléfines dans une séquence d'au moins deux réacteurs en boucle interconnectés au moyen d'une conduite de transfert, le transfert du polymère d'un premier réacteur en boucle vers un deuxième réacteur en boucle comprenant les étapes :
i) établissement d'un recyclage de la suspension de polymère vers le deuxième réacteur en boucle au moyen de ladite conduite de transfert, une fraction S1 de suspension de polymère soutirée dudit deuxième réacteur en boucle étant recyclée en retour vers lui en continu ;
ii) évacuation d'une fraction de suspension de polymère produite dans le premier réacteur en boucle dans une conduite d'évacuation raccordée à ladite conduite de transfert ;
où le rapport pondéral R entre la suspension de polymère totale S2 recyclée en retour vers ledit deuxième réacteur en boucle et la productivité de l'installation de polymérisation s'étend de 2 à 8.

2. Procédé selon la revendication 1, où un mélange des quantités respectives de suspension de polymère venant des étapes i) et ii) est réalisé dans ladite conduite de transfert.

3. Procédé selon la revendication 1, où ledit rapport pondéral R s'étend de 3 à 6.

4. Procédé selon la revendication 1, où ladite fraction de suspension de polymère S1 est soustraite en aval des moyens de pompage dudit deuxième réacteur en boucle.

5. Procédé selon la revendication 1, où les moyens de pompage dudit deuxième réacteur en boucle fournissent la hauteur de charge pour l'écoulement de la suspension de polymère le long de ladite conduite de transfert.

6. Procédé selon la revendication 1, où ladite suspension de polymère S1 se situe dans la plage de 1% à 10% en poids de la suspension de polymère circulant dans ledit deuxième réacteur en boucle.
